# EUROPÄISCHE PATENTSCHRIFT

(11) **EP 3 217 509 B1**
(45) Veröffentlichungstag und Bekanntmachung des Hinweises auf die Patenterteilung: **08.05.2019**
(21) Anmeldenummer: 17159482.3
(22) Anmeldetag: 07.03.2017
(51) Int. Cl.: H02J 7/00, B60L 11/18

(54) **ZWISCHENLAGER FÜR BATTERIEEINHEITEN**
TEMPORARY STORAGE FOR BATTERY UNITS
DÉPÔT PROVISOIRE POUR UNITÉS DE BATTERIE

(30) Priorität: 07.03.2016 DE 102016002620; 17.03.2016 DE 102016104989
(43) Veröffentlichungstag der Anmeldung: 13.09.2017
(73) Patentinhaber: Deutsche Post AG, 53113 Bonn (DE)
(72) Erfinder: Elsen, Olaf, 52146 Würselen (DE); Bockstette, Jens, 41464 Neuss (DE)
(74) Vertreter: Michalski Hüttermann & Partner Patentanwälte mbB

(56) Entgegenhaltungen:
- DE-A1-102011 105 417
- DE-A1-102012 015 522
- US-A1- 2009 066 291
- Anonymous: "Wie Daimler mit Smart-Batterien schon vor dem Verkauf Geld verdient", , 2. Februar 2016 (2016-02-02), XP055395509, Gefunden im Internet: URL:http://www.ingenieur.de/Themen/Energie speicher/Wie-Daimler-Smart-Batterien-Verka uf-Geld-verdient [gefunden am 2017-08-02]

## Beschreibung

Die Erfindung betrifft ein Zwischenlager für Batterieeinheiten, mit einer Mehrzahl Batterieeinheiten, mit einem Wechsel- und/oder Gleichrichter, einem Versorgungsnetz und einer Steuerung, wobei jede Batterieeinheit wenigstens eine aufladbare Batteriezelle und ein Batteriemanagementsystem zum Überwachen und Regeln der Batteriezelle aufweist und die Batterieeinheiten über den Wechsel- und/oder Gleichrichter mit dem Versorgungsnetz elektrisch verbunden sind.

Bedingt durch die immer größer werdende Anzahl an Elektro- oder Hybridfahrzeugen und sonstigen Traktionsanwendungen werden vermehrt Batterieeinheiten als Hochvolt-Batteriesysteme mit Lithium-Ionen-Zellen oder dergleichen benötigt. Neben den Energie speichernden Batteriezellen weisen derartige Batterieeinheiten ein Batteriemanagementsystem auf, durch welche die Batteriezellen hinsichtlich des Ladezustands, der Zellspannung, Temperatur und dergleichen überwacht und geregelt werden. Um die Lebensdauer der kostenintensiven Batterieeinheiten zu optimieren, ist eine fortwährende Entladung und Aufladung notwendig.

Dieser auch Zyklisieren genannte Vorgang beschert den Herstellern von Batterieeinheiten einen hohen Betriebsaufwand, da einerseits für in einem Ersatzteillager gelagerte Batterieeinheiten sowie andererseits in einem Zwischenlager gelagerte, für einen zeitnahen Einbau in ein Elektrofahrzeug vorgesehene Batterieeinheiten in aufwendiger Weise kontinuierlich zyklisiert werden müssen. Aus dem Stand der Technik bekannte Systeme zum Zyklisieren zeichnen sich durch eine hohe elektrische Verlustleistung und damit einhergehenden Kosten der notwendigen Wechsel- und/oder Gleichrichter sowie umständliche Lagerlogistik aus.

DE 10 2012 015 522 A1 beschreibt ein Verfahren zum Lagern und Bereitstellen von Batterieeinheiten mit wiederaufladbaren Batterieanordnungen, mit den Schritten Bereitstellen einer Bedarfsinformation, die für einen oder mehrere Bereitstellungszeitpunkte die Anzahl von benötigten Batterieeinheiten und deren gewünschte Ladezustände angibt und Auswählen von einer oder mehreren Batterieeinheiten.

Ausgehend von dieser Situation ist es eine Aufgabe der Erfindung, ein Zwischenlager anzugeben, mit dem ein Zyklisieren von Batterieeinheiten in besonders einfacher und kostengünstiger Weise möglich ist.

Die Aufgabe der Erfindung wird durch die Merkmale des Anspruchs 1 gelöst. Vorteilhafte Ausgestaltungen sind durch die Merkmale der abhängigen Ansprüche gegeben.

Demnach wird die Aufgabe durch ein Zwischenlager für Batterieeinheiten gelöst, mit einer Mehrzahl Batterieeinheiten, mit einem Wechsel- und/oder Gleichrichter, einem Versorgungsnetz und einer Steuerung, wobei jede Batterieeinheit wenigstens eine aufladbare Batteriezelle und ein Batteriemanagementsystem zum Überwachen und Regeln der Batteriezelle aufweist, wenigstens zwei Batterieeinheiten elektrisch in Reihe zu einem Strang geschaltet sind, der Strang über den Wechsel- und/oder Gleichrichter mit dem Versorgungsnetz elektrisch verbunden ist und die Steuerung mit in Kommunikationsverbindung mit allen Batteriemanagementsystemen steht und ausgestaltet ist, ein Aufladen der Batteriezelle und/oder der Batterieeinheit mit elektrischer Energie aus dem Versorgungsnetz, ein Einspeisen elektrischer Energie in das Versorgungsnetz durch Entladen der Batteriezelle und/oder der Batterieeinheit und/oder ein Zuschalten und/oder ein Abschalten der Batterieeinheit von dem Wechsel- und/oder Gleichrichter zu bewirken.

Ein wesentlicher Aspekt der Erfindung liegt darin, dass die Batterieeinheiten in einem Strang elektrisch in Reihe geschaltet sind. Gegenüber einer einzigen Batterieeinheit oder einer Parallelschaltung mehrerer Batterieeinheiten wird derart an dem Wechsel- und/oder Gleichrichter batterieseitig eine höhere Spannung erreicht, wodurch sich einerseits kostengünstigere und andererseits Wechsel- und/oder Gleichrichter mit wesentlich geringeren elektrischen Übertragungsverlusten verwenden lassen. Zudem lassen sich beim Entladen bzw. Laden der Batteriezellen bzw. der Batterieeinheit aufgrund der batterieseitig höheren Spannung Netzschwankungen des Versorgungsnetzes wesentlich effizienter ausgleichen. Durch die Anordnung von Batteriezellen bzw. der Batterieeinheit in einem Strang lässt sich zudem in dem Zwischenlager ein wesentlich einfacherer Austausch einer Batteriezelle bzw. der Batterieeinheit oder aller Batteriezellen bzw. Batterieeinheiten des Strangs vornehmen. Schließlich zeichnet sich die vorgeschlagene Anordnung aufgrund der Verwendung nur eines einzigen Wechsel- und/oder Gleichrichters anstelle eines jeder Batterieeinheit separat zugeordneten Wechsel- und/oder Gleichrichters durch wesentlich geringere Herstellungskosten aus.

Grundsätzlich lassen sich beliebige Batterieeinheiten verwenden, welche insbesondere für die Verwendung in Elektro- oder Hybridfahrzeugen oder sonstigen Traktionsanwendungen und bevorzugt als Hochvoltsystemen mit Lithium-Ionen-Zellen oder dergleichen ausgestaltet sind. Bevorzugt ist die aufladbare Batteriezelle als Akkumulator-Zelle mit Sekundärzelle ausgeführt, wobei weiter bevorzugt eine Mehrzahl Sekundärzellen elektrisch in Reihe und/oder parallel geschaltet vorgesehen sind. Das Batteriemanagementsystem umfasst bevorzugt eine Ladezustandserkennungen, eine Datenschnittstelle und/oder eine Leistungselektronik zum Laden bzw. Entladen für die Batteriezelle bzw. der Batterieeinheit, um die Batteriezelle bzw. der Batterieeinheit zu überwachen und zu regeln. Alternativ oder zusätzlich umfasst der Wechsel- und/oder Gleichrichter eine Leistungselektronik zum Laden bzw. Entladen für die Batteriezelle bzw. der Batterieeinheit. Das Versorgungsnetz ist bevorzugt als öffentliches Leitungsnetz ausgestaltet und wird von einem Energieversorgungsunternehmen bereitgestellt. Die Steuerung ist bevorzugt computerbasiert und weist eine Schnittstelle zur Verbindung mit der Datenschnittstelle des Batteriemanagementsystems zum Datenaustausch und Steuern desselben auf.

Durch die vorgeschlagene Anordnung kann in vorteiliger Weise der Energieverbrauch bei der Herstellung von Batterieeinheiten reduziert werden. In exemplarischer Anwendung können hergestellte und für den Einbau in einem Elektrofahrzeug designierte Batterieeinheiten mit einem niedrigen Ladezustand in dem Zwischenlager bereitgestellt werden in schonender Weise über Nacht bei günstigen Energiepreisen oder dann nachgeladen werden, wenn ein Energieüberschuss im Versorgungsnetz beispielsweise bei einem starkem Windaufkommen und dadurch günstigen Energiepreisen besteht. Beim Entladen der Batterieeinheiten kann die elektrische Energie zum Herstellen der Batterieeinheiten verwendet werden oder in das Versorgungsnetz eingespeist werden. Zudem können weitere Energieerzeuger wie Blockheizkraftwerke, Photovoltaikelemente und/oder Windenergie zum Aufladen der Batterieeinheiten und/oder zum Beheizen des Zwischenlagers verwendet werden. Mittels der Steuerung lässt sich in einer weiteren exemplarischen Anwendung ein erster Strang als Erzeuger von elektrischer Energie einen ersten netzseitigen Verbraucher und ein zweiter Strang als Verbraucher von elektrischer Energie einem ersten netzseitigen Erzeuger zuordnen. Dazu kann auf der Steuerung ein Steuerungsverfahren ausgeführt werden, welches das Laden bzw. Entladen der Stränge gemäß vorgegebener Kriterien wie Ladezustand oder dergleichen steuert.

Im Ergebnis lässt sich durch die vorgeschlagene Anordnung erreichen, dass gleichzeitig Batterieeinheiten durch Auslagern aus dem Zwischenlager verfügbar sind, Batterieeinheiten in das Zwischenlager eingelagert werden können, und dort auf einen vordefinierten Ladezustand gebracht werden können, elektrische Energie für die Herstellung der Batterieeinheiten bereitgestellt wird, Regelenergie und Regelleistung für den Netzbetreiber zum Ausgleichen von Netzschwankungen des Versorgungsnetzes zur Verfügung gestellt wird und beim Laden von Strängen mit einem Blockheizkraftwerk oder dergleichen zusätzlich Wärme auch so koordiniert werden kann, dass der Energieverbrauch und die Betriebskosten gegenüber aus dem Stand der Technik bekannten Ausgestaltungen wesentlich geringer ist. Zudem lassen sich durch den Anschluss des Zwischenlagers an das Versorgungsnetz monetäre Einnahmen aus der Bereitstellung von Primärregelleistung erzielen. Ferner lassen sich Funktionen wie Wareneingangskontrolle oder Warenausgangskontrolle, Pflege sowie Testmöglichkeiten der Batterieeinheiten durch die elektrische Nutzung dieser in dem Zwischenlager in einfacher Weise integrieren.

Nach einer bevorzugten Weiterbildung sind eine Mehrzahl jeweils mit dem Wechsel- und/oder Gleichrichter verbundener und elektrisch parallel zueinander geschalteter Stränge vorgesehen. Bevorzugt sind in jedem Strang eine gleich große Anzahl Batterieeinheiten vorgesehen. Die Stränge sind bevorzugt mittels der Steuerung einzeln mit dem Wechsel- und/oder Gleichrichter verbindbar. Weiter bevorzugt ist eine Zugangssperre und/oder Verriegelung vorgesehen, um die Batterieeinheit gegen eine ungeplante Entnahme beispielsweise während des Ladens zu sichern. Die Zugangssperre und/oder Verriegelung ist bevorzugt durch die Steuerung steuerbar.

Nach einer noch weiteren bevorzugten Weiterbildung sind eine Mehrzahl Wechsel- und/oder Gleichrichter und jeweils ein über den jeweiligen Wechsel- und/oder Gleichrichter mit dem Netzanschluss elektrisch verbundener Strang vorgesehen. Bei dieser Ausgestaltung ist jedem Strang ein einzelner Wechsel- und Gleichrichter zugeordnet, wobei jedoch jeder Wechsel- und/oder Gleichrichter wiederum eine Mehrzahl paralleler Stränge elektrisch kontaktieren kann. Beispielsweise sind zwei Wechsel- und/oder Gleichrichter vorgesehen, die auf jeder Seite des Zwischenlagers je zwei Stränge elektrisch kontaktieren.

Grundsätzlich lassen sich mittels der Steuerung verschiedene Verfahren zum Laden bzw. Entladen der Batterieeinheiten implementieren. Erfindungsgemäß ist die Steuerung jedoch ausgebildet, einen Strang auszuwählen, so dass der ausgewählte Strang innerhalb eines Zeitraums und/oder bis zu einem Bereitstellungszeitpunkt mit elektrischer Energie aus dem Versorgungsnetz geladen wird oder elektrische Energie in das Versorgungsnetz einspeist. Durch ein derart gezieltes Laden bzw. Entladen lässt sich beispielsweise ein Energielastmanagement zum Herstellen der Batterieeinheiten umsetzen oder ein Netzbetreiber kann beim geplanten Ausgleich von Versorgungsschwankungen im Versorgungsnetz unterstützt werden.

Zur Kommunikation zwischen Steuerung und Batteriemanagementsystemen bieten sich ebenso verschiedene Möglichkeiten an. Als besonders vorteilig hat sich ein Feldbus erwiesen, durch welchen die Steuerung mit den Batteriemanagementsystemen und/oder mit dem Wechsel- und/oder Gleichrichter verbunden ist. Bevorzugt ist an der Batterieeinheit eine Schnittstelle für den Feldbus vorgesehen und die Batteriemanagementsystem mit einer Kommunikationseinheit zum Kommunizieren über den Feldbus ausgestaltet. Durch Vorsehen eines Feldbusses können in besonders einfacher Weise die Batterieeinheiten zum Laden, Entladen, Trennen und/oder Verbinden gesteuert werden.

Nach einer bevorzugten Weiterbildung sind in dem Strang 3, 4, 5, 8, 10 oder 12 Batterieeinheiten elektrisch in Reihe hintereinander geschaltet, weist jede Batterieeinheit eine Nennspannung von ≥ 250V und ≤ 1kV, insbesondere 360V, 400V, 600V oder 700V, auf, und/oder weist der Wechsel- und/oder Gleichrichter strangseitig eine Nennspannung von ≥ 1kV und ≤ 5kV, insbesondere ≥ 2kV und ≤ 3kV, und/oder netzseitig eine Nennspannung von ≥ 10kV und ≤ 30kV auf. Der Fachmann wird aus diesen Werten zueinander passende Kombinationen auswählen. Sofern beispielsweise jeweils 12 Batterieeinheiten mit jeweils 250V Nennspannung in zwei parallelen Strängen jeweils in Reihe geschaltet sind, dann würde strangseitig bzw. batterieseitig an dem Wechsel- und/oder Gleichrichter eine Nennspannung von 3kV anliegen.

In besonders bevorzugten Ausgestaltung weist das Zwischenlager ein Regalsystem mit wenigstens zwei Regalen auf, wobei wenigstens zwei Stränge und eine Beladeeinrichtung vorgesehen, jeder Strang auf einem jeweiligen Regal angeordnet ist und die Beladeeinrichtung zum automatischen Einsetzen und/oder Herausnehmen der Batterieeinheit in das bzw. aus dem Regal und elektrischen Verbinden bzw. Trennen der Batterieeinheit mit bzw. vom dem Strang und/oder Verriegeln an dem Regal ausgestaltet ist. Die Beladeeinrichtung ist bevorzugt als Beladeroboter ausgeführt und/oder durch die Steuerung steuerbar. Bevorzugt sind die Regale gegenüberliegend angeordnet, so dass die Beladeeinrichtung zwischen den Regalen die Batterieeinheit Einsetzen, Herausnehmen und/oder Ersetzen kann. Weiter bevorzugt sind eine Mehrzahl Regale übereinander angeordnet vorgesehen und/oder die Regale derart dimensioniert und/oder in derartiger Anzahl vorgesehen, so dass ≥ 100, ≥ 200 und/oder ≤ 500 Batterieeinheiten auf den Regalen zwischengelagert werden können.

In diesem Zusammenhang ist besonders bevorzugt, dass das Zwischenlager eine Einrichtung zur Eingangskontrolle, Ausgangskontrolle und/oder End-of-Line Test der Batterieeinheit aufweist. Bevorzugt ist die Beladeeinrichtung ausgeführt, die Eingangskontrolle, Ausgangskontrolle und/oder End-of-Line Test und das Ergebnis desselben an die Steuerung zu übertragen.

Vorzugsweise weist das Verfahren folgende Schritte auf:
Austauschen aller Batterieeinheiten jedes Strangs spätestens nach 21 Tagen, vorzugsweise 14 Tagen und spätestens nach einem Energiedurchsatz des Strangs von ≤ 3000 kWh, vorzugsweise ≤ 2000 kWh,
Laden der Batterieeinheit während Zeiten günstiger Energiekosten, und/oder
Laden und/oder Entladen der Batterieeinheit zum Ausgleichen von Netzschwankungen des Versorgungsnetzes.

Durch das Verfahren wird in vorteiliger Weise erreicht, dass die Batterieeinheiten gemäß der ersten Alternative nur für eine zeitliche begrenzte Lagerdauer und nur für einen begrenzten Energiedurchsatz im Zwischenlager verbleiben. Nach der zweiten Alternative lassen sich die Energiekosten für das Laden dadurch optimieren, dass vorzugsweise nur in Zeiten mit günstigen Energiekosten, beispielsweise nachts, die Batterieeinheiten geladen werden. Bei der dritten Alternative werden Netzschwankungen ausgeglichen, wodurch die Spannungsqualität im Versorgungsnetz verbessert wird, insbesondere die Spannungshöhe, Frequenz, Kurvenform verbessert und/oder Störungen verringert werden. Die Zeit zum Austauschen aller Batterieeinheiten jedes Strangs wird in vorteilhafter Weise in Abhängigkeit von Lagerkapazität des Zwischenlagers festgelegt, insbesondere in Abhängigkeit der pro Tag benötigten Batterieeinheiten. Der Energiedurchsatz wird in weiter vorteilhafter Weise in Abhängigkeit vom Energieinhalt der Batterieeinheiten bestimmt, die exemplarisch bei 20 bis 40 kWh liegen kann.

Nachfolgend wird die Erfindung unter Bezugnahme auf die beiliegenden Zeichnungen näher erläutert.

Es zeigen:
Fig. 1 eine schematische Darstellung des Zwischenlagers gemäß einem bevorzugten Ausführungsbeispiel der Erfindung, und
Fig. 2 ein Flussdiagramm zur Bestückung des Zwischenlagers.

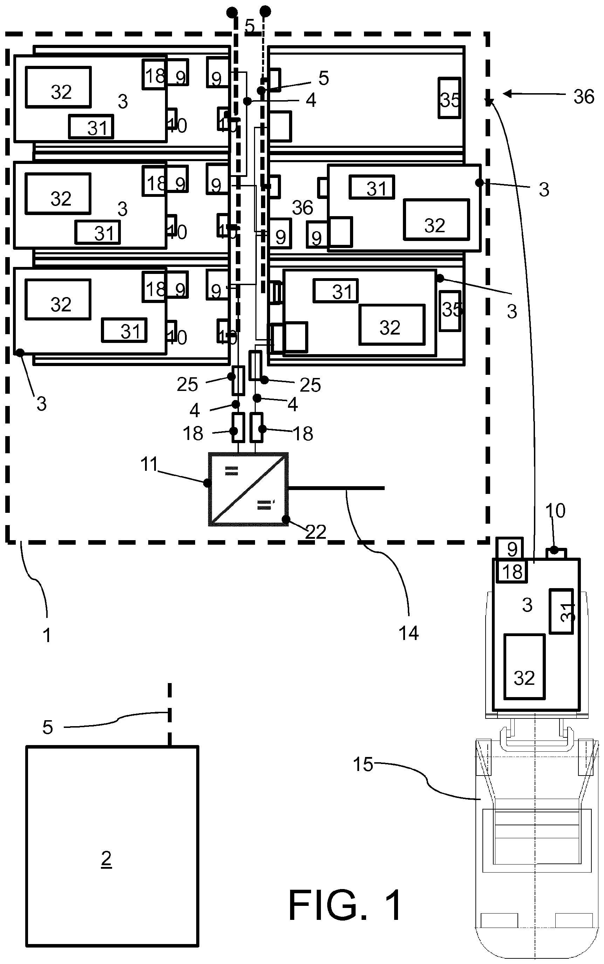

Fig. 1 zeigt eine schematische Darstellung eines Zwischenlagers 1, auch Batterieproduktionslager genannt, mit einer zentralen Steuerung 2 und einer Vielzahl von Strängen 6 mit Gleich- und/oder Wechselrichter 11 und Batterieeinheiten 3 mit Schnittstellen 9 und 10 zum Anschließen der Batterieeinheiten 3.

Die Batterieeinheiten 3 weisen jeweils eine Batteriezelle 31 und ein Batteriemanagementsystem 32 auf. In Fig. 1 sind jeweils drei Batterieeinheiten 3 über Energieübertragungsschnittstellen 9 und Energieübertragungsleitungen 4 zu einem Strang 6 elektrisch in Reihe geschaltet. Die Übertragungsleitungen 4 der beiden Stränge 6 sind an den Wechsel- und/oder Gleichrichter 11 angeschlossen, welcher wiederum über weitere Energieübertragungsleitungen, angedeutet in Fig. 1, an ein Versorgungsnetz 14 angeschlossen ist.

Jede Batterieeinheit 3 weist zudem eine Signalschnittstelle 10 auf, mittels derer das Batteriemanagementsystem 32 über einen Feldbus 5 mit der Steuerung 2 verbunden ist, wie in Fig. 1 angedeutet dargestellt ist. Durch das Batteriemanagementsystem 32 sind interne Betriebszustände der jeweiligen Batterieeinheit 3, beispielsweise über einen Stromsensor, Spannungssensor, der Temperatursensor, ermittelbar, um Informationen über den Ladezustand der jeweiligen Batteriezelle 31, eine Kennung der betreffenden Batterieeinheit 3, zu einem Lagerplatz der Batterieeinheit 3 in dem Zwischenlager 1 oder Fehlerinformationen über aufgetretene Fehler an die Steuerung 2 zu übertragen. Alternativ können anstelle einer Feldbus-Verbindung 5 auch eine Funkverbindung von jeder der Batterieeinheiten 3 zu der zentralen Steuerung 2 vorgesehen sein, um die entsprechenden Informationen zu übertragen und in der zentralen Steuerung 2 zu zentralisieren.

Dargestellt in Fig. 1 sind insgesamt 6 Regalplätze 36 zur jeweiligen Aufnahme einer Batterieeinheit 3. Zur Demonstration der Funktionsweise sind die Batterieeinheiten 3 des in Fig. 1 links dargestellten Strangs 6 in den Regalplätzen 36 eingesetzte, jedoch die Energieübertragungsschnittstellen 9 und Signalschnittstellen 10 der Batterieeinheiten 3 noch nicht elektrisch mit den dazu korrespondierenden Energieübertragungsschnittstellen 9 und Signalschnittstellen 10 des linken Strangs 6 verbunden. In dem in Fig. 1 zuunterst dargestellten Regalplatz 36 des rechten Strangs 6 sind die Energieübertragungsschnittstelle 9 und Signalschnittstelle 10 der Batterieeinheit 3 mit dem Strang 6 verbunden. In den in Fig. 1 zuoberst gezeigten Regalplatz 36 wird eine Batterieeinheit 3 durch eine weiter unten näher beschriebene Beladeeinrichtung 15 eingesetzt.

Die zentrale Steuerung 2 weist eine externe Kommunikationsschnittstelle, nicht gezeigt, zum Empfangen und/oder Abgeben von Informationen auf, die beispielsweise mit einer zentralen Leitwarte eines Netzbetreibers des Versorgungsnetzes 14 verbunden ist. Die externe Kommunikationsschnittstelle kann eine drahtgebunden Netzwerkverbindung, eine Funkverbindung und/oder eine Feldbus-Verbindung sein. Über die Kommunikationsschnittstelle können Lastanforderungen sowie Bedarfszahlen an Batterieeinheiten 3 aus der Produktion als auch Regelleistungsanforderungen sowie aktuelle Strompreise von der Leitwarte des Netzbetreibers übertragen werden. Weiterhin kann die zentrale Steuerung 2 auch Leistung- und Energieprognosen der angeschlossenen Stränge 6 aufnehmen und Speichern. Primär ist die Steuerung 2 zum Steuern des Stroms der Stränge 6 über die Wechsel- und/oder Gleichrichter 11 ausgebildet. Der durch die Steuerung 2 einzustellende Strom kann entsprechend einer Lastgangkurve oder über Strompreisinformationen gewählt werden und unterbrochen werden.

Der Wechsel- und/oder Gleichrichter 11 ist bidirektional ausgebildet, so dass einerseits elektrische Energie aus dem Versorgungsnetz 14 über einen Netzübertragungsanschluss 22, die weitere Übertragungsleitung, über ein Kopplungselement 18, eine Sicherung 25 und die Energieübertragungsleitung 4 an die angeschlossenen Batterieeinheit 3 zum Aufladen derselben führt, übertragen werden kann und andererseits in entgegengesetzter Richtung elektrischer Energie aus den Batterieeinheiten 3 zurück in das Versorgungsnetz 14 übertragen werden kann. Die zentrale Steuerung 2 weist weiterhin einen Mikroprozessor auf, der über eine Kommunikationsschnittstelle mit dem Feldbus 5 in Verbindung steht. Die Steuereinheit dient dazu, den Energiefluss von und zu jedem Strang 6 über die Wechsel- und/oder Gleichrichter 11 und der Batterieschnittstellen 9 zu überwachen, und gemäß einer Lager- und Energiebereitstellungsfunktion die Wechsel- und/oder Gleichrichter 11 so zu steuern, dass eine Lastoptimierung durchgeführt wird.

Die zentrale Steuerung 2 kann zudem einzelne Zustände des Wechsel- und/oder Gleichrichters 11 erfassen und Unterschiede in den Belastungen, Überlastungen sowie Fehler der einzelnen Stränge 6 erkennen. Werden die Belastungen der Stränge 6 und der Batterieeinheiten 3 zu groß, so kann die zentrale Steuerung 2 entscheiden, einen Ausgleich der Belastungen der Stränge 6 mithilfe einer entsprechenden Anweisung über die Feldbus-verbindung vorzunehmen.

Die Steuereinheit ist ferner mit einer Planungsfunktion versehen, die es ermöglicht, abhängig von dem momentanen Lastzustand eines angeschlossenen Strangs 6, der Aufenthaltsdauer der Batterieeinheit 3 in dem Strang 6, dem entnommenen Strom und der Lastanforderung einen Verfügbarkeitszeitpunk der Stränge 6 festzulegen. Dazu stehen der Steuereinheit Informationen über das Nutzungsprofils, die Seriennummern sowie Strangzugehörigkeit, Lagerplatz und der Ladezustand der verwendeten Batterieeinheiten 3 pro Strang 6 zur Verfügung und sind dort gespeichert. Mit diesen Informationen können Stränge 6 mit deren Batterieeinheiten 3 so lange wie möglich zur Energielastoptimierung zur Verfügung stehen. Analog kann, wenn bekannt ist, dass ein bestimmter Strang 6 mit Batterieeinheiten 3 nicht mehr zur Lastoptimierung benötigt wird, eine Bereitstellungsinformation über die zentrale Steuerung 2 an die Produktion erfolgen, damit die entsprechenden Batterieeinheiten 3 zur Produktion oder Auslieferung abgeholt werden und mit neuen Batterieeinheiten 2 aufgefüllt werden.

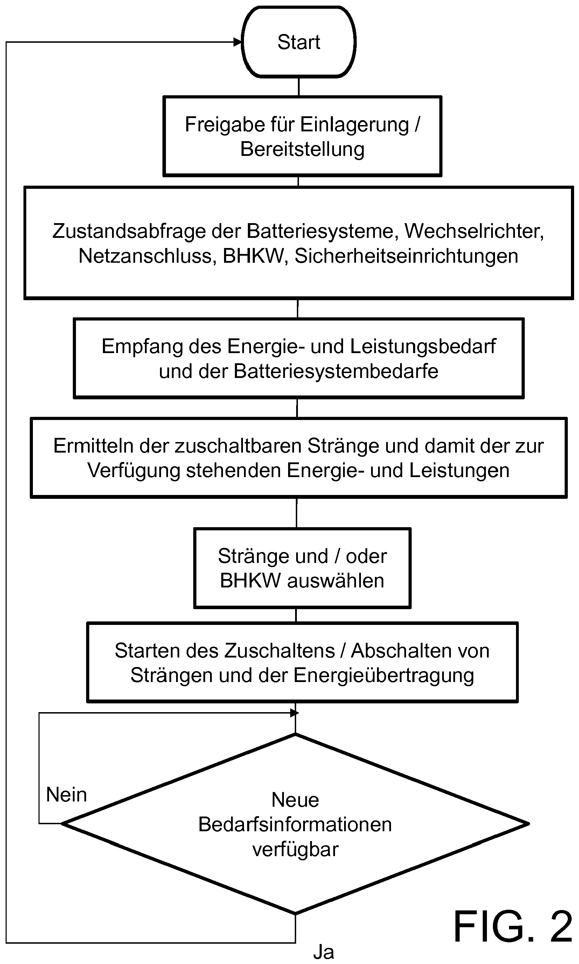

Bezug nehmend auf das Flussdiagramm der Figur 2 werden nachfolgend die Funktionen des Zwischenlagers 1 ausführlicher beschrieben. Das Zwischenlager 1 ist als ein Regallager mit Einschüben für Batterieeinheiten 3 und mehrere Energieübertragungsschnittstellen 9 und 22 zum seriellen Verbinden der Batterieeinheiten 3 zu Strängen 6 und an das Versorgungsnetz 14 mit mehreren Wechsel- und/oder Gleichrichter 11 ausgebildet.

Das Anschließen der Batterieeinheiten 3 kann manuell als auch automatisiert oder teilautomatisiert mit der Beladeeinrichtung 15 erfolgen, so dass beim Einschieben der Batterieeinheiten 3 in den entsprechenden Regalplatz 36 automatisch die Verbindungen 9 und 10 hergestellt werden. Derart ist das Zwischenlager 1 nicht nur in Greifhöhe oder Leiterhöhen, sondern auch in Hochregalanordnungen zu betreiben. Im ersten Schritt werden Sicherheitseinrichtungen wie Verriegelungen, Zugangssperre, Zustände der Stränge 6 und der Wechsel- und/oder Gleichrichter 11 abgefragt. Danach werden Informationen von unbenutzten und freigegebenen Strängen 6 sowie deren enthaltenen Batterieeinheiten 3 über die Kommunikationsschnittstelle und den Feldbus 5 an die Produktion kommuniziert. Die Steuerung 2 erhält eine Bedarfsinformation über benötigte Energie und Leistung von der Produktion oder dem Netzbetreiber und die benötigte Anzahl der Batterieeinheiten 3 für die Produktion entweder durch Eingabe an einer (nicht gezeigten) Benutzerschnittstelle oder über die externe Kommunikationsschnittstelle und den Feldbus 5.

Die Bedarfsinformation gibt im Wesentlichen an, welche Leistung und Energie die Produktion bzw. der Netzbetreiber benötigen und welche Anzahl von Batterieeinheiten 3 zu welchen Zeitpunkten in der Produktion benötigt wird. Abhängig von der Anzahl der angeschlossenen Stränge 6, Leistungsvermögen der Wechsel- und/oder Gleichrichter 11, und den Leistungsinformationen und Ladezuständen der im Strang 6 angeschlossenen Batterieeinheiten 3 ermittelt die Steuereinheit die zur Verfügung stehenden und übertragbare Leistung und Energiemenge. Weiterhin vergleicht die Steuerung 2 die zur Verfügung stehende Leistung und Energie sowie die Anzahl der freigegeben Batterieeinheiten 3 und freien Plätze 36 mit den Anforderungen der Produktion und des Netzbetreibers sowie mit dem Strompreis für das Laden der Batterieeinheiten 3.

Entsprechend der Bedarfsinformation werden entsprechend im nächsten Schritt die benötigten Stränge 6 ausgewählt, bei denen es möglich ist, diese innerhalb einer durch die Bedarfsinformation angegebenen Zeit an das Versorgungsnetz 14 über den Wechsel- und/oder Gleichrichter 11 anzuschließen, damit die Leistungs- und Energieanforderung erfüllt werden können. Zusätzlich benötigte Stränge 6 werden zugeschaltet und nicht benötigte Stränge 6 werden abgeschaltet und freigegeben. Entsprechend der Bedarfsinformation bereitzustellende Batterieeinheiten 3 werden nach ihrer Seriennummer, Einlagerungsdatum und Alterung durch die Nutzung ausgewählt und freigegeben. Die Auswahl wird entsprechend der Lagerdauer, Alterung und des Nutzungsprofil als auch dem niedrigsten Ladezustand priorisiert. Die Reihenfolge und damit der früheste Bereitstellungszeitraum für einen Strang 6 errechnen sich aus den vorher beschriebenen Parametern und Werten.

Für die übrigen angeschlossen und ausgewählten Stränge 6 wird entsprechend den Bedarfsanforderungen die Energie und Leistung bereitgestellt und in das Versorgungsnetz 14 eingespeist. Durch die kurze Lagerzeit ist keine Lebensdauer schonende Ladung und Lagerung notwendig, da die Batterieeinheiten 3 ständig durch neue ausgetauscht werden und bei durchlaufender Produktion nicht lange gelagert oder genutzt werden. Im letzten Schritt wird auf neue Bedarfsinformationen gewartet oder neue Bedarfsinformationen aus der Historie der Lastverteilung insbesondere der Produktion selbständig mit berücksichtigt, welche in der Steuerung gespeichert sind. Liegen neue Bedarfsinformationen vor so ist dies der Fall - Alternative: Ja, so wird zum Schritt Abfrage der Strangzustände zurückgesprungen.

### Bezugszeichenliste

- 1: Zwischenlager
- 2: Zentrale Steuerung
- 3: Batterieeinheit
- 4: Energieübertragungsleitung
- 5: Feldbus
- 6: Strang
- 9: Energieübertragungsschnittstelle
- 10: Kommunikationseinheit mit Schnittstelle
- 11: Wechsel- oder Gleichrichter
- 14: Stromversorgungsnetz
- 15: Beladeeinrichtung
- 18: Kopplungselement
- 25: Sicherung
- 31: Batteriezelle
- 32: Batteriemanagementsystem
- 36: Regalplatz

## Patentansprüche

1. Verfahren zum Lagern einer für einen Einbau in ein Elektrofahrzeug vorgesehenen Batterieeinheit (3) in einem Zwischenlager (1) zum Ausgleichen von Netzschwankungen eines Versorgungsnetzes (14), mit einer Mehrzahl Batterieeinheiten (3), jeweils aufweisend eine Energieübertragungsschnittstelle (9) und eine Signalschnittstelle (10), mit einem Wechsel- und/oder Gleichrichter (11), einer Steuerung (2), einem Regalsystem aufweisend wenigstens zwei Regale mit einer Mehrzahl von Einschüben für jeweils eine Batterieeinheit (3) und einer Beladeeinrichtung (15), wobei jeder Einschub eine Energieübertragungsschnittstelle (9) und eine Signalschnittstelle (10) aufweist, wobei
jede Batterieeinheit (3) wenigstens eine aufladbare Batteriezelle (31) und ein Batteriemanagementsystem (32) zum Überwachen und Regeln der Batteriezelle (31) aufweist,
jeweils wenigstens zwei Batterieeinheiten (3) elektrisch in Reihe zu einem Strang (6) geschaltet sind,
mit einer Mehrzahl mit dem Wechsel- und/oder Gleichrichter (11) verbundener und elektrisch parallel zueinander geschalteter Stränge (6),
der jeweilige Strang (6) über den Wechsel- und/oder Gleichrichter (11) mit dem Versorgungsnetz (14) elektrisch verbunden ist und
die Steuerung (2) in Kommunikationsverbindung mit allen Batteriemanagementsystemen (32) steht und ausgebildet ist, ein Aufladen der Batteriezelle (31) und/oder der Batterieeinheit (3) mit elektrischer Energie aus dem Versorgungsnetz (14), ein Einspeisen elektrischer Energie in das Versorgungsnetz (14) durch Entladen der Batteriezelle (31) und/oder der Batterieeinheit (3) und/oder ein Zuschalten und/oder ein Abschalten der Batterieeinheit (3) von dem Wechsel- und/oder Gleichrichter (11) zu bewirken, und mit den Schritten:
Einsetzen der Batterieeinheiten (3) mittels der Beladeeinrichtung (15) in jeweilige Einschübe eines Regals derart, dass beim Einschieben einer Batterieeinheit (3) durch die Beladeeinrichtung (15) automatisiert die Energieübertragungsschnittstelle (9) der Batterieeinheit (3) mit der Energieübertragungsschnittstelle (9) des jeweiligen Einschubs verbunden wird und die Signalschnittstelle (10) der Batterieeinheit (3) mit der Signalschnittstelle (10) des jeweiligen Einschubs verbunden wird, womit die Batterieeinheiten (3) zu einem jeweiligen Strang (6) und die Signalschnittstellen (10) der Batterieeinheiten (3) mit der Steuerung (2) verbunden werden,
Laden eines mittels der Steuerung (2) ausgewählten Strangs (6) mit elektrischer Energie aus dem Versorgungsnetz (14) und/oder Einspeisen von elektrischer Energie aus dem ausgewählten Strang (6) in das Versorgungsnetz (14) innerhalb eines Zeitraums und/oder bis zu einem Bereitstellungszeitpunkt, um Netzschwankungen des Versorgungsnetzes (14) auszugleichen, und
Austauschen aller Batterieeinheiten (3) jedes Strangs (6) derart, dass durch Entnahme der Batterieeinheiten (3) aus den Einschüben durch die Beladeeinrichtung (15) automatisiert die Energieübertragungsschnittstellen (9) von dem jeweiligen Strang (6) und die Signalschnittstellen (10) von der Steuerung (2) getrennt werden.

2. Verfahren nach dem vorhergehenden Anspruch, mit einer Mehrzahl Wechsel- und/oder Gleichrichter (11) und jeweils einem über den jeweiligen Wechsel- und Gleichrichter (11) mit dem Netzanschluss (14) elektrisch verbundenem Strang (6)

3. Verfahren nach einem der vorhergehenden Ansprüche, mit einem Feldbus (5), durch welchen die Steuerung (2) mit den Batteriemanagementsystemen (32) und/oder mit dem Wechsel- und/oder Gleichrichter (11) verbunden ist.

4. Verfahren nach einem der vorhergehenden Ansprüche, wobei 3, 4, 5, 8 oder 10 Batterieeinheiten (3) elektrisch in Reihe in dem Strang (6) geschaltet sind, jede Batterieeinheit (3) eine Nennspannung von ≥ 250V und ≤ 1kV aufweist, und/oder der Wechsel- und/oder Gleichrichter (11) strangseitig eine Nennspannung von ≥ 1kV und ≤ 5kV und/oder Netzseitig eine Nennspannung von ≥ 10kV und ≤ 30kV aufweist.

5. Verfahren nach dem vorhergehenden Anspruch, aufweisend eine Einrichtung zur Eingangskontrolle, Ausgangskontrolle und/oder End-of-Line Test der Batterieeinheit (3) ausgestaltet ist.

6. Verfahren nach einem der vorhergehenden Ansprüche und mit dem Schritt:
Austauschen aller Batterieeinheiten (3) jedes Strangs spätestens nach 14 Tagen und/oder nach einem Energiedurchsatz des Strangs (6) von ≤ 2000 oder 3000 kWh, und/oder
Laden der Batterieeinheit (3) während Zeiten günstiger Stromkosten.

## Claims

1. A method for storing a battery unit (3), which is intended for installation in an electric vehicle, in an intermediate storage facility (1) to compensate for network fluctuations of a supply network (14), comprising a plurality of battery units (3), each including an energy transmission interface (9) and a signal interface (10), comprising an inverter and/or rectifier (11), a control unit (2), a shelving system comprising at least two shelves including a plurality of slots for a respective battery unit (3) and a loading device (15), each slot comprising an energy transmission interface (9) and a signal interface (10), wherein
each battery unit (3) comprises at least one rechargeable battery cell (31) and a battery management system (32) for monitoring and regulating the battery cell (31);
at least two battery units (3) in each case are electrically connected in series to form a string (6);
comprising a plurality of strings (6) that are connected to the inverter and/or rectifier (11) and electrically connected in parallel to one another;
the respective string (6) is electrically connected to the supply network (14) via the inverter and/or rectifier (11); and
the control unit (2) is communicatively connected to all battery management systems (32) and designed to effectuate a charging of the battery cell (31) and/or of the battery unit (3) with electrical energy from the supply network (14), a feeding of electrical energy into the supply network (14) by discharging the battery cell (31) and/or the battery unit (3) and/or a connection and/or a disconnection of the battery unit (3) from the inverter and/or rectifier (11), and comprising the following steps:
inserting the battery units (3) by way of the loading device (15) in respective slots of a shelf in such a way that, during the insertion of a battery unit (3) by the loading device (15), the energy transmission interface (9) of the battery unit (3) is automatically connected to the energy transmission interface (9) of the respective slot, and the signal interface (10) of the battery unit (3) is connected to the signal interface (10) of the respective slot, whereby the battery units (3) are connected to form a respective string (6) and the signal interfaces (10) of the battery units (3) are connected to the control unit (2);
charging a string (6) selected by way of the control unit (2) with electrical energy from the supply network (14) and/or feeding electrical energy from the selected string (6) into the supply network (14) within a time period and/or up to a provision point in time so as to compensate for network fluctuations of the supply network (14); and
replacing all battery units (3) of each string (6) in such a way that, upon the removal of the battery units (3) from the slots by the loading device (15), the energy transmission interfaces (9) are automatically disconnected from the respective string (6) and the signal interfaces (10) are disconnected from the control unit (2).

2. The method according to the preceding claim, comprising a plurality of inverters and/or rectifiers (11) and a respective string (6) electrically connected to the AC power supply (14) by way of the respective inverter and rectifier (11).

3. The method according to any one of the preceding claims, comprising a field bus (5) by way of which the control unit (2) is connected to the battery management systems (32) and/or to the inverter and/or rectifier (11).

4. The method according to any one of the preceding claims, wherein 3, 4, 5, 8 or 10 battery units (3) are electrically connected in series in the string (6), each battery unit (3) has a rated voltage of ≥ 250V and ≤ 1kV, and/or the inverter and/or rectifier (11) has a rated voltage of ≥ 1V and ≤ 5kV on the string side and/or a rated voltage of ≥ 10V and ≤ 30kV on the network side.

5. The method according to the preceding claim, comprising a device designed for incoming inspection, outgoing inspection and/or end-of-line testing of the battery unit (3).

6. The method according to any one of the preceding claims and comprising the following step:
replacing all battery units (3) of each string at the latest after 14 days and/or after an energy throughput of the string (6) of ≤ 2000 or 3000 kWh, and/or
charging the battery unit (3) during times where electricity costs are less expensive.

## Revendications

1. Procédé de stockage d'une unité de batterie (3), prévue pour un montage dans un véhicule électrique, dans un système de stockage intermédiaire (1) pour la compensation d'oscillations de réseau d'un réseau d'alimentation (14), avec une multiplicité d'unités de batteries (3) présentant respectivement une interface de transmission d'énergie (9) et une interface de signal (10), avec un onduleur et/ou un redresseur (11), un système de commande (2), un système d'étagères présentant au moins deux étagères avec une multiplicité de tiroirs pour respectivement une unité de batterie (3) et un dispositif de charge (15), où chaque tiroir présente une interface de transmission d'énergie (9) et une interface de signal (10), où
chaque unité de batterie (3) présente au moins une cellule de batterie (31) rechargeable et un système de gestion de batterie (32) pour la surveillance et la régulation de la cellule de batterie (31),
respectivement au moins deux unités de batterie (3) sont branchées électriquement en série pour constituer un ensemble linéaire (6),
avec une multiplicité d'ensembles linéaires (6) reliés avec l'onduleur et/ou le redresseur (11) et branchés électriquement en parallèle les uns par rapport aux autres,
l'ensemble linéaire (6) en question par lequel l'onduleur et/ou le redresseur (11) sont reliés électriquement avec le réseau d'alimentation (14), et
le système de commande (2) est en liaison de connexion avec tous les systèmes de gestion de batterie (32) et est conçu pour provoquer une charge de la cellule de batterie (31), et/ou de l'unité de batterie (3), avec de l'énergie électrique provenant du réseau d'alimentation (14), une alimentation en énergie électrique dans le réseau d'alimentation (14) par la décharge de la cellule de batterie (31) et/ou de l'unité de batterie (3), et/ou une mise en circuit et/ou une mise hors circuit de l'unité de batterie (3) à partir de l'onduleur et/ou du redresseur (11), et avec les étapes :
d'insertion des unités de batterie (3) au moyen du dispositif de charge (15) dans des tiroirs respectifs d'une étagère de sorte que, lors de l'insertion d'une unité de batterie (3), l'interface de transmission d'énergie (9) de l'unité de batterie (3) est automatiquement reliée par le dispositif de charge (15) avec l'interface de transmission d'énergie (9) du tiroir en question et l'interface de signal (10) de l'unité de batterie (3) est reliée avec l'interface de signal (10) du tiroir en question, ce par quoi les unités de batterie (3) sont reliées dans un ensemble linéaire (6) respectif et les interfaces de signal (10) des unités de batterie (3) sont reliées avec le système de commande (2),
de charge d'un ensemble linéaire (6) choisi au moyen du système de commande (2) avec de l'énergie électrique à partir du réseau d'alimentation (14) et/ou d'alimentation en énergie électrique à partir de l'ensemble linéaire (6) choisi dans le réseau d'alimentation 14) en l'espace d'un laps de temps, et/ou jusqu'à un moment de mise à disposition afin de compenser des oscillations de réseau du réseau d'alimentation (14), et
de remplacement de toutes les unités de batterie (3) de chaque ensemble linéaire (6) de telle manière que, par un retrait des unités de batterie (3) hors des tiroirs, les interfaces de transmission d'énergie (9) sont automatiquement séparées de l'ensemble linéaire (6) respectif et les interfaces de signal (10) sont séparées du système de commande (2).

2. Procédé selon la revendication précédente, avec une multiplicité d'onduleurs et/ou de redresseurs (1) et un ensemble linéaire (6) relié électriquement et respectivement avec l'alimentation de réseau (14) par l'onduleur et/ou le redresseur (11) respectif.

3. Procédé selon l'une des revendications précédentes, avec un bus de secteur (5) par lequel le système de commande (2) est relié avec les systèmes de gestion de batteries (32) et/ou avec l'onduleur et/ou le redresseur (11).

4. Procédé selon l'une des revendications précédentes, dans lequel 3, 4, 5, 8 ou 10 unités de batterie (3) sont branchées électriquement en série dans l'ensemble linéaire (6), chaque unité de batterie (3) présente une tension nominale de ≥ 250 V et ≤ 1 kV, et/ou l'onduleur et/ou le redresseur (11) présentent du côté de l'ensemble linéaire une tension nominale de ≥ 1 kV et ≤ 5 kV, et/ou du côté réseau une tension nominale de ≥ 10 kV et ≤ 30 kV.

5. Procédé selon la revendication précédente, présentant un dispositif destiné au contrôle d'entrée, au contrôle de sortie et/ou un test de fin de ligne (End-of-Line) de l'unité de batterie (3).

6. Procédé selon l'une des revendications précédentes, et avec l'étape :
de remplacement de toutes les unités de batteries (3) de chaque ensemble linéaire au plus tard après 14 jours, et/ou après une énergie disponible de l'ensemble linéaire (6) ≤ 2000 ou 3000 kWh, et/ou
de charge de l'unité de batterie (3) pendant des périodes de coûts de courant plus économiques.
